## Europäisches Patentamt

## European Patent Office

## Office européen des brevets

(19)

(11) Veröffentlichungsnummer: **0 192 071**
B1

(12)

# EUROPÄISCHE PATENTSCHRIFT

(45) Veröffentlichungstag der Patentschrift:
10.05.89

(51) Int. Cl.⁴: **H04L 11/00, H04L 11/10**

(21) Anmeldenummer: **86100793.8**

(22) Anmeldetag: **22.01.86**

(54) Verfahren zum Ermitteln der Dauer des Bestehens einer Verbindung.

(30) Priorität: **20.02.85 DE 3505873**

(43) Veröffentlichungstag der Anmeldung:
**27.08.86 Patentblatt 86/35**

(45) Bekanntmachung des Hinweises auf die Patenterteilung:
**10.05.89 Patentblatt 89/19**

(84) Benannte Vertragsstaaten:
**AT DE IT NL**

(56) Entgegenhaltungen:
**EP-A- 0 088 310**

**PATENT ABSTRACTS OF JAPAN, Band 9,
Nr. 115 (E-315)[1838], 18. May 1985; &
JP-A-60 5649 (FUJITSU K.K.) 12-01-1985**

(73) Patentinhaber: **Siemens Aktiengesellschaft Berlin und München, Wittelsbacherplatz 2, D-8000 München 2(DE)**

(72) Erfinder: **Franz, Dietmar, Dipl.-Ing. (FH),
Edelweissstrasse 66, D-8039 Puchheim(DE)**

## Beschreibung

Die Erfindung betrifft ein Verfahren zum Ermitteln der Dauer des Bestehens einer Verbindung zwischen Teilnehmerstellen einer Datenvermittlungsanlage wobei die betreffenden Teilnehmerstellen über eine an der Datenvermittlungsanlage über eine Mehrzahl von Übertragungskanälen angeschlossene Signalbehandlungseinrichtung dadurch Datensignale austauschen, daß während des Bestehens einer zwischen einer der Teilnehmerstellen und der Signalbehandlungseinrichtung aufgebauten ersten Verbindung die zu behandelnden Datensignale in der Signalbehandlungseinrichtung eingespeichert werden und daß die eingespeicherten Datensignale nach einer entsprechenden Behandlung im Zuge mindestens einer zweiten Verbindung über die Datenvermittlungsanlage an mindestens eine weitere Teilnehmerstelle weitergeleitet werden, wobei die Dauer des Bestehens der ersten Verbindung in der Datenvermittlungsanlage und die Dauer des Bestehens der zweiten Verbindung bzw. Verbindungen in der Signalbehandlungseinrichtung ermittelt wird.

Im Zusammenhang mit der Übertragung von Datensignalen zwischen mit unterschiedlichen Übertragungsprozeduren arbeitenden Teilnehmerstellen einer Datenvermittlungsanlage ist es bereits bekannt, einen mit der Datenvermittlungsanlage verbundenen Signalumsetzer in die Signalübertragung einzubeziehen (DE-OS 3 207 265). Bei Einbeziehung eines solchen Signalumsetzers setzt sich eine Verbindung zwischen den Teilnehmerstellen aus zwei Teilverbindungen zusammen, nämlich aus einer ersten Verbindung zwischen einer mit einer ersten Übertragungsprozedur arbeitenden Teilnehmerstelle und dem Signalumsetzer sowie aus einer zweiten Verbindung zwischen diesem Signalumsetzer und der mit einer zweiten Übertragungsprozedur arbeitenden Teilnehmerstelle. Für die Ermittlung einer Gesamtverbindungsdauer wird die Dauer des Bestehens der ersten Verbindung in der Datenvermittlungsanlage und die Dauer des Bestehens der zweiten Verbindung in dem Signalumsetzer ermittelt. Nach dem Weiterleiten der mit Hilfe des Signalumsetzers umgesetzten Datensignale an die in Frage kommende Teilnehmerstelle werden die in dem Signalumsetzer ermittelten Angaben bezüglich der Dauer des Bestehens der zweiten Verbindung zu der Datenvermittlungsanlage hin übertragen, die aus diesen Angaben und aus den in ihr bereits vorhandenen Angaben eine Gesamtverbindungsdauer ermittelt. Dies führt jedoch in der Datenvermittlungsanlage zu einer zusätzlichen dynamischen Belastung, die zuweilen unerwünscht ist.

Es ist nun Aufgabe der vorliegenden Erfindung, einen Weg zu zeigen, wie bei einem Verfahren der eingangs genannten Art ohne zusätzliche dynamische Belastung der Datenvermittlungsanlage aus den bezüglich der Dauer des Bestehens der einzelnen Verbindungen gewonnenen Angaben eine Gesamtverbindungsdauer ermittelt werden kann.

Gelöst wird die vorstehend aufgezeigte Aufgabe bei einem Verfahren der eingangs genannten Art erfindungsgemäß dadurch, daß nach der Einspeicherung der Datensignale in die Signalbehandlungseinrichtung über einen ggf. von den Übertragungskanälen verschiedenen Sonderkanal im Zuge einer gesonderten Verbindung ein den für die Übertragung der Datensignale gerade benutzten Übertragungskanal bezeichnendes Meldesignal zu der Datenvermittlungsanlage hin übertragen wird und daß auf den Empfang des Meldesignals hin von der Datenvermittlungsanlage im Zuge der Verbindung Angaben bezüglich der in der Datenvermittlungsanlage ermittelten Dauer des Bestehens der das gerade empfangene Meldesignal betreffenden Verbindung zu der Signalbehandlungseinrichtung hin übertragen werden, in welcher aus diesen Angaben und den in der Signalbehandlungseinrichtung ermittelten Angaben eine Gesamtdauer der Verbindung ermittelt wird.

Die Erfindung bringt einerseits den Vorteil mit sich, daß durch die Ermittlung der Gesamtverbindungsdauer in der Signalbehandlungseinrichtung in der Datenvermittlungsanlage praktisch keine zusätzliche dynamische Belastung gegenüber der Ermittlung des Bestehens ausschließlich über diese Datenvermittlungsanlage verlaufender durchgehender Verbindungen auftritt. Andererseits wird durch die Verwendung eines Sonderkanals für die Übertragung der für die einzelnen Übertragungskanäle in der Datenvermittlungsanlage ermittelten Angaben eine über die für die Übertragung von zu behandelnden Datensignalen erforderliche Belegung hinausgehende Belegung der Übertragungskanäle vermieden.

Zweckmäßigerweise wird auf den Empfang eines Meldesignals hin der diesem entsprechende Übertragungskanal von der Datenvermittlungsanlage her für eine erneute Datensignalübertragung wieder freigegeben. Auf diese Weise kann ein für eine Datensignalübertragung belegter Übertragungskanal nach der Einspeicherung der Datensignale in die Signalbehandlungseinrichtung ohne Verwendung zusätzlicher von der Signalbehandlungseinrichtung abzugebender Steuersignale von der Datenvermittlungsanlage her wieder freigegeben werden.

Gemäß einer vorteilhaften Ausgestaltung des Verfahrens gemäß der vorliegenden Erfindung ist vorgesehen, daß Angaben bezüglich der in der Signalbehandlungseinrichtung ermittelten Gesamtdauer der jeweiligen Verbindung für eine spätere Nachverarbeitung zu einer mit der Signalbehandlungseinrichtung verbundenen Speichereinrichtung übertragen werden. Dies bringt den Vorteil mit sich, daß für eine derartige Nachverarbeitung keine über die für die Aufnahme von zu behandelnden Datensignalen erforderliche Speicherkapazität hinausgehende Speicherkapazität in der Signalbehandlungseinrichtung erforderlich ist. Vielmehr können für diese Nachverarbeitung externe Speichermedien bereitgestellt werden, die eine Aufnahme von größeren Datenmengen ermöglichen, wie z.B. Magnetplattenspeicher oder Magnetbandspeicher.

In der Signalbehandlungseinrichtung können auch mit einem geringen zusätzlichen Steuerungsaufwand zusätzlich zu den Angaben bezüglich der Gesamtdauer der jeweiligen Verbindung auch Angaben bezüglich des für eine Weiterleitung der behandelten Datensignale von der Signalbehandlungseinrichtung her jeweils veranlaßten Verbindungsaufbaus für eine statistische Auswertung erfaßt und zusammen mit den Angaben bezüglich der Gesamtdauer der jeweiligen Verbindung zu der Speichereinrichtung hin übertragen werden.

Der schaltungstechnische Aufwand für die Übertragung von Signalen zu der Speichereinrichtung hin kann dann innerhalb der Signalbehandlungseinrichtung besonders gering gehalten werden, wenn die in der Signalbehandlungseinrichtung ermittelten Angaben über den bereits erwähnten Sonderkanal im Zuge einer gesonderten Verbindung zu der Speichereinrichtung hin übertragen werden. Denn in diesem Falle können zum großen Teil die für die Übertragung von Meldesignalen vorhandenen Übertragungswege mit benutzt werden.

Bei einer Benutzung des Sonderkanals für eine Signalübertragung zu der Speichereinrichtung hin ist in der Datenvermittlungsanlage ein besonders geringer Steuerungsaufwand dann erforderlich, wenn die Speichereinrichtung an eine Teilnehmerleitung der Datenvermittlungsanlage angeschlossen wird. Auf diese Weise wird die Speichereinrichtung von der Datenvermittlungsanlage her wie eine Teilnehmereinrichtung behandelt, so daß für die Signalübertragung zu der Speichereinrichtung hin von der Datenvermittlungsanlage lediglich Steuerungsvorgänge für den normalen Verbindungsbetrieb zu aktivieren sind.

Im folgenden wird die Erfindung anhand einer Zeichnung beispielsweise näher beschrieben.

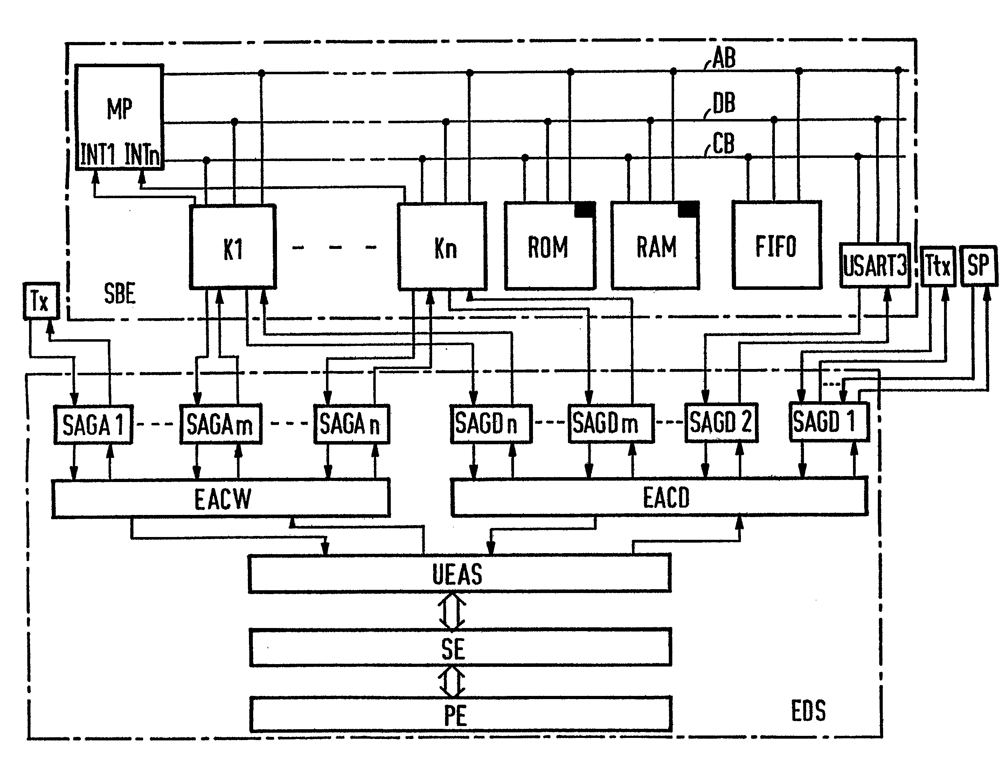

In der Zeichnung ist eine Datenvermittlungsanlage EDS dargestellt, welche allgemein zur Übertragung von Datensignalen dient. Unter diese Datensignale fallen auch beispielsweise Fernschreibzeichen oder Sprachsignale in digital kodierter Form. Um dieses zu verdeutlichen, wird deshalb im folgenden die Datenvermittlungsanlage als Fernschreib- und Datenvermittlungsanlage bezeichnet.

Von dieser Fernschreib- und Datenvermittlungsanlage sind zwei verschiedene Gruppen von Anschlußschaltungen dargestellt. Zu einer ersten Gruppe gehören dabei die Anschlußschaltungen SAGA1 bis SAGAn, von denen in der Zeichnung lediglich die Anschlußschaltunngen SAGA1, SAGAm und SAGAn dargestellt sind. Diese Anschlußschaltungen dienen dazu, digitale Datensignale polaritätswechselweise zu verarbeiten. Auf den mit ihnen verbundenen Übertragungsleitungen ist beispielsweise eine Signalübertragung unter Ausnutzung des internationalen Telegrafenalphabets Nr. 2 mit einer für Telexübertragungen üblichen Datenübertragungsrate von 50 Bd möglich. Damit sind beispielsweise an diese Anschlußschaltungen übliche Fernschreib- bzw. Telex-Endgeräte anschließbar. In der Zeichnung ist ein derartiges mit Tx bezeichnetes Telex-Endgerät mit der Anschlußschaltung SAGA1 verbunden.

Die zweite Gruppe von Anschlußschaltungen umfaßt die Anschlußschaltungen SAGD1 bis SAGDn. Von diesen sind in der Zeichnung lediglich die Anschlußschaltungen SAGD1, SAGD2, SAGDm und SAGDn dargestellt. Diese Anschlußschaltungen verarbeiten digitale Datensignale in Form von Bitgruppen, die auch als Envelopes bezeichnet werden. Beispielsweise können sie digitale Datensignale entsprechend dem internationalen Alphabet IA Nr. 5 mit einer Datenübertragungsrate von beispielsweise 2400 bit/s abgeben und aufnehmen. Es handelt sich hierbei um eine synchrone Datenübertragung. An die Anschlußschaltungen sind beispielsweise sogenannte Bürofernschreibstationen anschließbar, die auch als Teletex-Endgeräte bezeichnet werden. Ein derartiges in der Zeichnung mit Ttx bezeichnetes Teletex-Endgerät ist an die Anschlußschaltung SAGD1 angeschlossen. Diese Anschlußschaltung steht außerdem noch mit einer weiteren in der Zeichnung mit SP bezeichneten Einrichtung in Verbindung. Bei dieser Einrichtung, auf die im folgenden noch näher eingegangen wird, handelt es sich um eine Speichereinrichtung mit einem Kommunikationsteil, welches eine Signalübertragung über Teilnehmerleitungen der Fernschreib- und Datenvermittlungsanlage ermöglicht.

Bezüglich der zuvor genannten Anschlußschaltungen sei darauf hingewiesen, daß diese jeweils mit einer Vielzahl von Übertragungsleitungen (Teilnehmerleitungen) verbunden sind, an die Telex-Endgeräte bzw. Teletex-Endgeräte anschließbar sind. Die in der Zeichnung mit Tx und Ttx bezeichneten Endgeräte sind demzufolge stellvertretend für eine Vielzahl von Endgeräten angegeben. Darüber hinaus kann es sich bei den Übertragungsleitungen aber auch um sogenannte Amtsverbindungsleitungen handeln, über welche jeweils zwei Fernschreib- und Datenvermittlungsanlagen miteinander in Verbindung stehen.

Neben den zuvor genannten Anschlußschaltungen sind als Schaltungsteile der Fernschreib- und Datenvermittlungsanlage EDS noch Eingabe-/Ausgabe-Codewandler EACW und EACD, eine Übertragungsablaufsteuerung UEAS, eine Speichereinheit SE und schließlich eine Programmsteuereinheit PE angegeben. Auf das Zusammenwirken dieser Schaltungsteile wird hier nicht näher eingegangen, da dieses bereits hinlänglich bekannt ist (siehe beispielsweise "Siemens-Zeitschrift", Heft 2, 1977, Seiten 82 bis 87).

Mit der Fernschreib- und Datenvermittlungsanlage EDS ist schließlich noch die bereits oben erwähnte Signalbehandlungseinrichtung SBE verbunden. Diese Signalbehandlungseinrichtung dient zur Behandlung von über die Fernschreib- und Datenvermittlungsanlage zu übertragenden Datensignalen. Eine Behandlung von Datensignalen kann dabei beispielsweise in einer Datenübertragungsprozedur- und/oder Datenformatumsetzung, in einer Weiterleitung der Datensignale an eine vorgegebene Anzahl von Teilnehmerstellen oder auch in einer Zwischenspeicherung der Datensignale bis zu deren Abruf durch beispielsweise eine autorisierte Person bestehen. Derartige Signalbehandlungseinrichtungen werden auch allgemein als Sende- und Empfangshilfen bezeichnet. Beispiele für derartige Signalbehandlungseinrichtungen sind Signalumsetzer, Rundsendeeinrichtungen, welche an eine Mehrzahl von Teilnehmerstellen weiterzuleitende Datensignale zugeführt erhalten, und Einrichtungen für den elektronischen Briefdienst (Mail-Box), in welchen von autorisierten Personen abrufbare Nachrichten (Datensignale) zwischengespeichert sind.

Die Signalbehandlungseinrichtung SBE stellt ein Mikroprozessorsystem dar. Zu diesem System gehört ein Mikroprozessor MP, der mit weiteren zu dem System gehörenden Einrichtungen über ein Busleitungssystem verbunden ist. Dieses Busleitungssystem besteht dabei aus einem Adreßbus AB, einem Datenbus DB und einem Steuerbus CB. Mit diesem Busleitungssystem ist u. a. eine aus einem Festwertspeicher ROM, einem Arbeitsspeicher RAM mit wahlfreiem Zugriff (Schreib-/Lese-Speicher) und aus einem Durchlaufspeicher FIFO bestehende Speicheranordnung verbunden.

Außerdem sind mit dem Busleitungssystem der Signalbehandlungseinrichtung SBE Übertragungskanäle K1 bis Kn verbunden. Von diesen sind in der Zeichnung lediglich die Übertragungskanäle K1 und Kn dargestellt. Diese Übertragungskanäle dienen sowohl zur Übertragung von zu behandelnden Datensignalen zu der Signalbehandlungseinrichtung hin als auch zur Abgabe von in dieser behandelten Datensignalen an die Fernschreib- und Datenvermittlungsanlage. Intern weisen die Übertragungskanäle im wesentlichen Schnittstellenschaltungen für den Anschluß an die bereits oben erwähnten Anschlußschaltungen der Fernschreib- und Datenvermittlungsanlage EDS auf.

Es können dabei beispielsweise Schnittstellenschaltungen verwendet werden, wie sie bereits in der Patentanmeldung DE-A 3 431 762 beschrieben worden sind.

Jeder der Übertragungskanäle ist sowohl mit einer zu der ersten Gruppe von Anschlußschaltungen (SAGA1 bis SAGAn) gehörenden Anschlußschaltung als auch mit einer zu der zweiten Gruppe von Anschlußschaltungen (SAGD1 bis SAGDn) gehörenden Anschlußschaltung der Fernschreib- und Datenvermittlungsanlage verbunden. In der Zeichnung ist der Übertragungskanal K1 an die Anschlußschaltungen SAGAm und SAGDn angeschlossen. Der Übertragungskanal Kn ist dagegen mit den Anschlußschaltungen SAGAn und SAGDm verbunden.

Wie bereits erwähnt, sind die Übertragungskanäle K1 bis Kn über das interne Busleitungssystem der Signalbehandlungseinrichtung SBE mit dem Mikroprozessor MP verbunden. Über dieses Busleitungssystem erfolgt die Signalübertragung von bzw. zu dem Mikroprozessor hin. Der Mikroprozessor ist außerdem mit seinen Unterbrechungseingängen INT1 bis INTn jeweils an einen Übertragungskanal K1 bis Kn angeschlossen. Über diese Verbindungen kann der Mikroprozessor MP im Betrieb von den Übertragungskanälen her veranlaßt werden, die Abwicklung von Datenübertragungsvorgängen zu steuern.

Mit dem Busleitungssystem der Signalbehandlungseinrichtung SBE ist schließlich noch eine Schnittstellenschaltung USART3 verbunden, über die ein bidirektional betriebener Sonderkanal zu der Fernschreib- und Datenvermittlungsanlage EDS hin verläuft. In dieser verläuft der Sonderkanal über die Anschlußschaltung SAGD2.

Nachdem zuvor der Aufbau der in der Zeichnung dargestellten Schaltungsanordnung erläutert worden ist, sei nunmehr auf das Verfahren gemäß der vorliegenden Erfindung näher eingegangen. Hierzu sei angenommen, daß die Signalbehandlungseinrichtung SBE eine Umsetzung von ihr zugeführten Teletex-Signalen in Telex-Signale bzw. von Telex-Signalen in Teletex-Signale ermöglicht. Sind beispielsweise von dem in der Zeichnung dargestellten Teletex-Endgerät Ttx Datensignale zu dem Telex-Endgerät Tx hin zu übertragen, so wird zunächst zwischen dem genannten Teletex-Endgerät und der Fernschreib- und Datenvermittlungsanlage EDS eine Verbindung aufgebaut, beispielsweise entsprechend der CCITT-Empfehlung X.21. Aus den im Zuge des Verbindungsaufbaues von dem Teletex-Endgerät her übertragenen Wählzeichen geht dabei hervor, daß eine Verbindung zu einem Telex-Endgerät gewünscht ist, d.h. daß eine Umsetzung der Übertragungsprozedur vorzunehmen ist. Derartige Wählzeichen werden in der Fernschreib- und Datenvermittlungsanlage als solche erkannt.

Bei Erkennen von Verbindungswünschen zu der Signalbehandlungseinrichtung SBE hin belegt die Fernschreib- und Datenvermittlungsanlage EDS einen bis dahin freien Übertragungskanal der Signalbehandlungseinrichtung. Nach der Belegung eines solchen Übertragungskanals, beispielsweise des Übertragungskanals K1, wird dann von der Fernschreib- und Datenvermittlungsanlage her eine Verbindung über den belegten Übertragungskanal zu der Signalbehandlungseinrichtung hin aufgebaut. Der Verbindungsaufbau kann dabei beispielsweise gemäß der CCITT Empfehlung X.71 erfolgen. Nach dem Verbindungsaufbau überträgt die Fernschreib- und Datenvermittlungsanlage die von dem Teletex-Endgerät Ttx abgegebenen umzusetzenden Datensignale zu der Signalbehandlungseinrichtung hin. Gleichzeitig mit dieser Übertragung ermittelt die Fernschreib- und Datenvermittlungsanlage die Dauer des Bestehens der aufgebauten Verbindung zwischen dem Teletex-Endgerät Ttx und der Signalbehandlungseinrichtung. Angaben bezüglich dieser Dauer werden dabei zunächst ggfs. für eine spätere Gebührenermittlung zwischengespeichert. Für diese Zwischenspeicherung können beispielsweise den einzelnen Übertragungsleitungen der Fernschreib- und Datenvermittlungsanlage individuell zugeordnete Speicherbereiche der Speichereinheit SE zugeordnet sein.

Für die Aufnahme von umzusetzenden Datensignalen werden den einzelnen Übertragungskanälen der Signalbehandlungseinrichtung Speicherbereiche des bereits oben erwähnten Arbeitsspeichers RAM durch den Mikroprozessor MP der Signalbehandlungseinrichtung zugeordnet. Zusammen mit den umzusetzenden Datensignalen werden dabei auch von der Fernschreib- und Datenvermittlungsanlage her im Zuge des Verbindungsaufbaues übertragene Signalisierungsinformationen zwischengespeichert, die einerseits den Sender der umzusetzenden Datensignale, hier das Teletex-Endgerät Ttx, bezeichnen und die andererseits eine anschließende Weiterleitung der umgesetzten Datensignale an den in Frage kommenden Empfänger dieser Datensignale ermöglichen. Bei dem hier gewählten Beispiel ist der Empfänger das Telex-Endgerät Tx.

Die Zuordnung eines Speicherbereiches des Arbeitsspeichers RAM zu einem Übertragungskanal erfolgt wahlfrei durch den Mikroprozessor MP. Hierfür kann beispielsweise in dem Arbeitsspeicher ein gesonderter Speicherbereich vorgesehen sein, in dem die aktuelle Zuordnung der einzelnen Speicherbereiche zu den Übertragungskanälen K1 bis Kn festgehalten ist.

Nach dem Einschreiben der über den als Beispiel gewählten Übertragungskanal K1 aufgenommenen Datensignale in den diesem Übertragungskanal zugeteilten Speicherbereich des Arbeitsspeichers RAM wird die über den Übertragungskanal K1 zu der Fernschreib- und Datenvermittlungsanlage und dem Teletex-Endgerät Ttx hin verlaufende Verbindung in bekannter Weise wieder abgebaut. Bis zu diesem Zeitpunkt wird in der Fernschreib- und Datenvermittlungsanlage die Dauer des Bestehens dieser Verbindung erfaßt. In der Signalbehandlungseinrichtung wird dem Übertragungskanal K1 von diesem Zeitpunkt an ein weiterer nicht durch Datensignale bereits belegter Speicherbereich des Arbeitsspeichers RAM zugeordnet. Dafür wird ein entsprechender Eintrag in den bereits genannten gesonderten Speicherbereich vorgenommen. Nach der Zuordnung eines solchen freien Speicherbereiches gibt der Mikroprozessor MP dann ein Meldesignal für den Übertragungskanal K1 ab. Dieses den Übertragungskanal K1 bezeichnende Meldesignal wird dabei zunächst in den Durchlaufspeicher FIFO eingeschrieben. In diesen Durchlaufspeicher werden im übrigen sämtliche für die Übertragungskanäle K1 bis Kn abgegebenen Meldesignale aufgenommen.

Der Durchlaufspeicher FIFO wird von dem Mikroprozessor MP der Signalbehandlungseinrichtung her in vorgegebenen Zeitabständen für die Abgabe jeweils eines zwischengespeicherten Meldesignals angesteuert. Die Abgabe erfolgt dabei in der Reihenfolge des Einschreibens dieser Meldesignale. Erkennt nun der Mikroprozessor MP bei der zyklischen Abfrage des Durchlaufspeichers ein derartiges Meldesignal, so baut er über den über die Schnittstellenschaltung USART3 und die Anschlußschaltung SAGD1 verlaufenden Sonderkanal eine Verbindung zu der Fernschreib- und Datenvermittlungsanlage auf. Im Zuge dieser Verbindung wird dann das betreffende Meldesignal zu der Fernschreib- und Datenvermittlungsanlage EDS hin übertragen. Das Auftreten eines derartigen Meldesignals bewirkt nun in dieser einerseits die Freigabe des bis dahin belegten Übertragungskanals, hier des Übertragungskanals K1. Andererseits werden von der Fernschreib- und Datenvermittlungsanlage die bis dahin für diesen Übertragungskanal gespeicherten Angaben bezüglich der Dauer des Bestehens der gerade abgebauten Verbindung zu der Signalbehandlungseinrichtung hin übertragen. Die übertragenen Angaben werden dabei zunächst in den Arbeitsspeicher RAM übernommen und zwar in den Speicherbereich, in den zuvor auch die im Zuge der gerade abgebauten Verbindung übertragenen Datensignale übernommen worden sind.

Für die Weiterleitung der zuvor über den Übertragungskanal K1 übertragenen und in einem diesem zugeteilten Speicherbereich des Arbeitsspeichers gespeicherten Datensignale wird von dem Mikroprozessor MP her über einen freien Übertragungskanal eine Verbindung an Hand der gespeicherten Empfängerdaten zu dem Empfänger, hier zu dem Telex-Endgerät Tx, hin aufgebaut. Die Übertragung der für diesen Verbindungsaufbau erforderlichen Signalisierungsinformationen erfolgt dabei über die Anschlußschaltungen SAGAm und SAGA1 der Fernschreib- und Datenvermittlungsanlage. Dies kann beispielsweise unter Anwendung üblicher Telex-Signalisierungsprozeduren erfolgen, etwa in der Weise, daß bis zu der Fernschreib- und Datenvermittlungsanlage hin eine Zwischenamtssignalisierung und für den verbleibenden Teil der aufzubauenden Verbindung eine Teilnehmersignalisierung durchgeführt wird. Nach dem Verbindungsaufbau werden dann die in dem Arbeitsspeicher RAM gespeicherten, von dem Teletex- Endgerät Ttx abgegebenen Datensignale ausgelesen und von dem Mikroprozessor in von Telex-Endgeräten verarbeitbare Datensignale umgesetzt, die über die genannte Verbindung zu dem Telex-Endgerät Tx hin übertragen werden. Nach der vollständigen Übertragung der zwischengespeicherten Datensignale wird die zu dem Telex-Endgerät hin verlaufende Verbindung wieder in bekannter Weise ausgelöst. Nach diesem Auslösen wird dann der Speicherbereich, aus dem die gerade übertragenen Datensignale ausgelesen worden sind, für andere Übertragungskanle wieder freigegeben. Diese Freigabe wird dabei in dem bereits genannten gesonderten Speicherbereich des Arbeitsspeichers RAM festgehalten.

Mit dem Weiterleiten der Datensignale zu dem für diese in Frage kommenden Empfänger hin, hier zu dem Telex-Endgerät Tx hin, beginnt die Signalbehandlungseinrichtung SBE die Dauer der für das Weiterleiten der Datensignale erforderlichen Zeitspanne zu ermitteln. Zur Markierung des Anfangszeitpunktes der bestehenden Verbindung kann hierzu beispielsweise der Zählerstand einer in der Signalbehandlungseinrichtung vorhandenen periodisch umlaufenden Zählereinrichtung verwendet werden. Um derartige Zählerstände für die einzelnen Übertragungskanle zwischenspeichern zu können, kann für jeden der Übertragungskanäle eine gesonderte Speicherzelle des Arbeitsspeichers RAM reserviert sein. Mit dem Abschluß des Weiterleitens der behandelten Datensignale ermittelt dann der Mikroprozessor der Signalbehandlungseinrichtung an Hand des aktuellen Zählerstandes und des zwischengespeicherten zugehörigen Anfangszählerstandes die Zeitspanne, die für das Weiterleiten der Datensignale erforderlich gewesen ist. Aus den daraus gewonnenen Angaben und den bereits zusammen mit den gerade übertragenen Datensignalen gespeicherten Angaben ermittelt schließlich der Mikroprozessor MP eine Gesamtverbindungsdauer und zeichnet die diesbezüglichen Angaben für eine später durchzuführende Gebührenermittlung auf. Für diese Aufzeichnung können beispielsweise Speicherbereiche des Arbeitsspeichers RAM der Signalbehandlungseinrichtung oder mit dieser direkt verbundene Speichereinrichtungen verwendet werden. Eine weitere Möglichkeit besteht darin, daß die in der Signalbehandlungseinrichtung ermittelten Angaben zu einer mit der Datenvermittlungsanlage verbundenen Speichereinrichtung übertragen werden. Auf ein dafür geeignetes Übertragungsverfahren wird im folgenden noch näher eingegangen.

Vorstehend wurde die Übertragung von Datensignalen von einem Teletex-Endgerät zu einem Telex-Endgerät hin erläutert. Auch bei einer Signalübertragung in der Gegenrichtung, d.h. bei einer Übertragung von einem Telex-Endgerät zu einem Teletex-Endgerät hin, können die Dauer des Bestehens der einzelnen Teilverbindungen und die Gesamtverbindungsdauer in der gerade dargestellten Weise ermittelt werden. Das gleiche gilt auch, wenn es sich bei der Signalbehandlungseinrichtung SBE um eine Rundsendeeinrichtung oder um eine Einrichtung für den elektronischen Briefdienst (Mail-Box) handelt.

Lediglich im Falle einer Rundsendeeinrichtung ergeben sich noch einige Besonderheiten. Diese bestehen darin, daß von der Rundsendeeinrichtung die Dauer des Bestehens einer Mehrzahl von Verbindungen ermittelt wird. Die Zahl richtet sich dabei nach der Zahl der Teilnehmerstellen, an die die zwischengespeicherten Datensignale jeweils zu übertragen sind. Für diese Ermittlung ist in dem Arbeitsspeicher RAM der Rundsendeeinrichtung auch eine entsprechende Anzahl von Speicherplätzen für jeden der Übertragungskanäle K1 bis Kn zu reservieren, um die oben angegebenen Anfangszählerstände für die einzelnen Verbindungen zwischenzuspeichern.

Unabhängig davon, um welche Art von Signalbehandlungseinrichtung es sich in einem konkreten Fall handelt, können in der betreffenden Signalbehandlungseinrichtung für eine spätere statistische Auswertung neben den Angaben bezüglich der Dauer des Bestehens der jeweiligen Verbindung auch Angaben bezüglich des für eine Weiterleitung behandelter Datensignale von der Signalbehandlungseinrichtung her jeweils veranlaßten Verbindungsaufbaus erfaßt werden. Unter diese Angaben fallen beispielsweise Angaben bezüglich der Verweildauer der einzelnen zu behandelnden Datensignale in der Signalbehandlungseinrichtung oder auch Angaben bezüglich der Anzahl der Verbindungsaufbauversuche, die für eine Weiterleitung der zu behandelnden Datensignale erforderlich waren. Diese Angaben werden zusammen mit den Angaben bezüglich der Dauer des Bestehens der jeweiligen Verbindung für eine spätere statistische Auswertung aufgezeichnet.

Es wurde bereits oben darauf hingewiesen, daß für die Aufzeichnung von in der Signalbehandlungseinrichtung SBE ermittelten Angaben eine mit der Fernschreib- und Datenvermittlungsanlage verbundene externe Speichereinrichtung verwendet werden kann. Eine solche Speichereinrichtung ist in der Zeichnung mit SP bezeichnet. Eine Übertragung der in dieser aufzuzeichnenden Angaben kann nun in der Weise erfolgen, daß von der Signalbehandlungseinrichtung her eine gesonderte Verbindung unter Benutzung des bereits erwähnten Sonderkanals zu der Speichereinrichtung SP aufgebaut wird. Diese Verbindung verläuft demzufolge, wie in der Zeichnung dargestellt, über die Schnittstellenschaltung USART3 sowie die Anschlußschaltungen SAGD2 und SAGD1.

. Für den Anstoß eines Verbindungsaufbaus zu der Speichereinrichtung SP hin gibt der Mikroprozessor MP immer dann ein Steuersignal ab, wenn von ihm für einen bestimmten Übertragungskanal eine Gesamtverbindungsdauer ermittelt worden ist. Ein solches Steuersignal enthält dabei neben den die Gesamtverbindungsdauer betreffenden Angaben auch Angaben bezüglich des jeweils in die Datensignalübertragung einbezogenen Senders. Auf diese Weise ist in der Speichereinrichtung SP eine teilnehmerindividuelle Aufzeichnung von Gesamtverbindungsdauern betreffenden Angaben und eine damit im Zusammenhang stehende Gebührenerfassung möglich. In diesem Zusammenhang sei nochmals darauf hingewiesen, daß Angaben bezüglich des jeweiligen Senders zusammen mit den zu behandelnden Datensignalen in dem Arbeitsspeicher RAM der Signalbehandlungseinrichtung gespeichert sind.

Die gerade erwähnten Steuersignale werden innerhalb der Signalbehandlungseinrichtung SBE in der gleichen Weise wie die bereits oben erwähnten Meldesignale behandelt. Mit anderen Worten, auch diese Steuersignale werden vor ihrer Bearbeitung zunächst in den Durchlaufspeicher FIFO eingetragen. Die Bearbeitung erfolgt dann in der Reihenfolge des Einschreibens dieser Steuersignale, wobei zwischen zwei aufeinanderfolgende Steuersignale auch Meldesignale eingefügt sein können.

Ist die aufgrund der über den obengenannten Sonderkanal zu übertragenden Steuersignale und Meldesignale auftretende Datenmenge so hoch, daß durch eine verzögerte Abarbeitung von Meldesignalen die Freigabe von belegten Übertragungskanälen über ein zulässiges Maß hinaus verzögert wird, so ist es vorteilhaft, für die Übertragung von Meldesignalen und Steuersignalen unterschiedliche Sonderkanäle zu der Fernschreib- und Datenvermittlungsanlage EDS hin zu benutzen. Hierfür sind dann anstelle der einen Schnittstellenschaltung USART3 zwei gesonderte Schnittstellenschaltungen vorzusehen, die in entsprechender Weise mit der Fernschreib- und Datenvermittlungsanlage zu verbinden sind.

Vorstehend wurde lediglich der Fall betrachtet, daß Meldesignale über einen von den Übertragungskanälen K1 bis Kn verschiedenen Sonderkanal übertragen werden. Dies bringt den Vorteil mit sich, daß die Übertragungskanäle ausschließlich für die Übertragung von zu behandelnden Datensignalen zur Verfügung stehen. Es ist jedoch auch möglich, einen gerade nicht in eine Übertragung von Datensignalen einbezogenen Übertragungskanal für die Dauer der Übertragung von Meldesignalen als Sonderkanal zu benutzen. Entsprechendes gilt auch für die Übertragung von Steuersignalen. Auf diese Weise reduziert sich der schaltungstechnische Aufwand in der Signalbehandlungseinrichtung ohne Erhöhung der Belegungsdauer der in Datensignalübertragungen einbezogenen Übertragungskanäle.

**Patentansprüche**

1. Verfahren zum Ermitteln der Dauer des Bestehens einer Verbindung zwischen Teilnehmerstellen (Ttx, Tx) einer Datenvermittlungsanlage (EDS), wobei die betreffenden Teilnehmerstellen über eine an die Datenvermittlungsanlage über eine Mehrzahl von Übertragungskanälen (K1 bis Kn) angeschlossene Signalbehandlungseinrichtung (SBE) dadurch Datensignale austauschen, daß während des Bestehens einer zwischen einer der Teilnehmerstellen (z. B. Ttx) und der Signalbehandlungseinrichtung aufgebauten ersten Verbindung die zu behandelnden Datensignale in die Signalbehandlungseinrichtung eingespeichert werden und daß die eingespeicherten Datensignale nach einer entsprechenden Behandlung im Zuge mindestens einer zweiten Verbindung über die Datenvermittlungsanlage an mindestens eine weitere Teilnehmerstelle (z.B. Tx) weitergeleitet werden, wobei die Dauer des Bestehens der ersten Verbindung in der Datenvermittlungsanlage und die Dauer des Bestehens der zweiten Verbindung bzw. Verbindungen in der Signalbehandlungseinrichtung ermittelt wird, dadurch gekennzeichnet, daß nach der Einspeicherung der Datensignale in die Signalbehandlungseinrichtung (SBE) über einen ggf. von den Übertragungskanälen verschiedenen Sonderkanal (USART3) im Zuge einer gesonderten Verbindung ein den für die Übertragung der Datensignale gerade benutzten Übertragungskanal (z.B. K1) bezeichnendes Meldesignal zu der Datenvermittlungsanlage (EDS) hin übertragen wird und daß auf den Empfang des Meldesignals hin von der Datenvermittlungsanlage im Zuge der Verbindung Angaben bezüglich der in der Datenvermittlungsanlage ermittelten Dauer des Bestehens der das gerade empfangene Meldesignal betreffenden Verbindung zu der Signalbehandlungseinrichtung (SBE) hin übertragen werden, in welcher aus diesen Angaben und den in der Signalbehandlungseinrichtung ermittelten Angaben eine Gesamtdauer der Verbindung ermittelt wird.

2. Verfahren nach Anspruch 1, dadurch gekennzeichnet, daß auf den Empfang eines Meldesignals hin der diesem entsprechende Übertragungskanal (K1) von der Datenvermittlungsanlage (EDS) her für eine erneute Datensignalübertragung wieder freigegeben wird.

3. Verfahren nach Anspruch 1 oder 2, dadurch gekennzeichnet, daß Angaben bezüglich der in der Signalbehandlungseinrichtung (SBE) ermittelten Gesamtdauer der jeweiligen Verbindung für eine spätere Nachverarbeitung zu einer mit der Signalbehandlungseinrichtung verbundenen Speichereinrichtung (SP) übertragen werden.

4. Verfahren nach Anspruch 3, dadurch gekennzeichnet, daß in der Signalbehandlungseinrichtung (SBE) zusätzlich zu den Angaben bezüglich der Gesamtdauer der jeweiligen Verbindung auch Angaben bezüglich des für eine Weiterleitung der behandelten Datensignale von der Signalbehandlungseinrichtung her jeweils veranlaßten Verbindungsaufbaus für eine statistische Auswertung erfaßt und zusammen mit den Angaben bezüglich der Gesamtdauer der jeweiligen Verbindung zu der Speichereinrichtung (SP) hin übertragen werden.

5. Verfahren nach Anspruch 3 oder 4, dadurch gekennzeichnet, daß die in der Signalbehandlungseinrichtung (SBE) ermittelten Angaben über den Sonderkanal (USART3) im Zuge einer gesonderten Verbindung zu der Speichereinrichtung (SP) hin übertragen werden.

6. Verfahren nach Anspruch 5, dadurch gekennzeichnet, daß die Speichereinrichtung (SP) an eine Teilnehmerleitung der Datenvermittlungsanlage (EDS) angeschlossen wird.

**Claims**

1. Method of determining the duration of the existence of a connection between subscriber stations (Ttx, Tx) of a data exchange (EDS), the respective subscriber stations exchanging data signals via a signal handling device (SBE) connected to the data exchange via a plurality of transmission channels (K1 to Kn) in such a manner that, during the existence of a first connection established between one of the subscriber stations (e.g. Ttx) and the signal handling device, the data signals to be handled are stored in the signal handling device and that the stored data signals are forwarded after a corresponding handling in the course of at least a second connection via the data exchange to at least one further subscriber station (e.g. Tx), the duration of the existence of the first connection being determined in the data exchange and the duration of the existence of the second connection or connections being determined in the signal handling device, characterized in that, after storage of the data signals in the signal handling device (SBE) via a separate channel (USART3), if appropriate different from the transmission channels, in the course of a separate connection an indication signal designating the transmission channel (e.g. K1) just used for the transmission of the data signals is transmitted to the data exchange (EDS), and in that upon the reception of the indication signal the data exchange transmits in the course of the connection information regarding the duration, determined in the date exchange, of the existence of the connection to the signal handling device (SBE) relating to the indication signal just received, in which signal handling device a total duration of the connection is determined from this information and from the information determined in the signal handling device.

2. Method according to Claim 1, characterized in that upon the reception of an indication signal the transmission channel (K1) corresponding thereto is released again by the data exchange (EDS) for a renewed data signal transmission.

3. Method according to Claim 1 or 2, characterized in that information regarding the total duration of the respective connection determined in the signal handling device (SBE) is transmitted to a storage device (SP) connected to the signal handling device for subsequent postprocessing.

4. Method according to Claim 3, characterized in that, in addition to the information regarding the total duration of the respective connection, also information regarding the connection establishment initiated in each case for the forwarding of the handled data signals by the signal handling device is recorded in the signal handling device (SBE) for a statistical evaluation and is transmitted together with the information regarding the total duration of the respective connection to the storage device (SP).

5. Method according to Claim 3 or 4, characterized in that the information determined in the signal handling device (SBE) is transmitted via the separate channel (USART3) in the course of a separate connection to the storage device (SP).

6. Method according to Claim 5, characterized in that storage device (SP) is connected to a subscriber line of the data exchange (EDS).

**Revendications**

1. Procédé pour déterminer la durée de l'existence d'une liaison entre des postes d'abonnés (Ttx, Tx) d'une installation de commutation de données (EDS), selon lequel les postes d'abonnés concernés échangent des signaux de données par l'intermédiaire d'un dispositif (SBE) de traitement des signaux, raccordé à l'installation de commutation de données par l'intermédiaire d'une multiplicité de canaux de transmission (K1 à Kn) grâce au fait que, pendant l'existence d'une première liaison établie entre l'un des postes d'abonnés (par exemple Ttx) et le dispositif de traitement de signaux, les signaux de données devant être traités sont mémorisés dans le dispositif de traitement des signaux et que les signaux de données mémorisés sont retransmis, après un traitement correspondant, au cours d'au moins une seconde liaison, par l'intermédiaire de l'installation de commutation de données, à au moins un autre poste d'abonné (par exemple Tx), la durée de l'existence de la première liaison étant déterminée dans l'installation de commutation de données et la durée de l'existence de la ou des secondes liaisons étant déterminées dans le dispositif de traitement des signaux, caractérisé par le fait qu'après la mémorisation des signaux de données dans le dispositif (SBE) de traitement des signaux, un signal de signalisation, qui désigne le canal de transmission (par exemple K1) utilisé précisément pour la transmission des signaux de données, est transmis à l'installation (EDS) de commutation de données, au cours d'une liaison particulière, par l'intermédiaire d'un canal particulier (USART3) qui est éventuellement différents des canaux de transmission, et que, lors de la réception du signal de signalisation par l'installation de commutation de données au cours de la liaison, des indications concernant la durée, déterminée dans l'installation de commutation de données, de l'existence de la liaison concernant le signal de signalisation précisément reçu, sont transmises au dispositif (SDE) de traitement des signaux, dans lequel la durée globale de la liaison est déterminée à partir de ces indications et des indications déterminées dans le dispositif de traitement des signaux.

2. Procédé suivant la revendication 1, caractérisé par le fait que lors de la réception d'un signal de signalisation, le canal de transmission (K1) correspondant à ce signal est à nouveau autorisé, à partir de l'installation (EDS) de commutation de données, pour une nouvelle transmission de signaux de données.

3. Procédé suivant la revendication 1 ou 2, caractérisé par le fait que les indications concernant la durée totale, déterminée dans le dispositif (SBE) de traitement des signaux, de la liaison respective sont transmises, en vue d'un traitement complémentaire ultérieur, à un dispositif de mémoire (SPE) relié au dispositif de traitement des signaux.

4. Procédé suivant la revendication 3, caractérisé par le fait que dans le dispositif (SBE) de traitement des signaux, outre les indications concernant la durée totale de la liaison respective, également des indications concernant l'établissement d'une liaison, déclenchée respectivement pour une retransmission des signaux de données traités, à partir du dispositif de traitement des signaux, sont enregistrées en vue d'une évaluation statistique et sont transmises, conjointement avec les indications concernant la durée totale de la liaison respective, au dispositif de mémoire (SBE).

5. Procédé suivant la revendication 3 ou 4, caractérisé par le fait que les indications déterminées dans le dispositif (SBE) de traitement des signaux et concernant le canal particulier (USART3) sont transmises au cours d'une liaison particulière au dispositif de mémoire (SP).

6. Procédé suivant la revendication 5, caractérisé par le fait que le dispositif de mémoire (SP) est raccordé à une ligne d'abonné de l'installation (EDS) de commutation des données.